# EUROPEAN PATENT APPLICATION

(11) **EP 4 579 507 A2**
(43) Date of publication of application: **02.07.2025**
(21) Application number: 24208953.0
(22) Date of filing: 25.10.2024
(51) Int. Cl.: G06F 21/64, G06F 21/70, G06F 21/81, H03K 17/00, H03K 17/08, G06F 1/26

(54) **POWER SEMICONDUCTOR SOC AND OPERATING METHOD FOR POWER SEMICONDUCTOR SOC**

(30) Priority: 28.12.2023 KR 20230195277
(71) Applicant: ACMEX ALMAZ Co., Ltd., Cheongju-si, Chungcheongbuk-do 28118 (KR)
(72) Inventor: SHIN, Dong Hoon, Yangpyeong-gun (KR); KIM, Chin Ui, Daejeon (KR)
(74) Representative: Samson & Partner Patentanwälte mbB

(57) **Abstract**

The present disclosure provides a power semiconductor SoC including DC-based power usage measurement, control, and security elements that can be used as a core element of a blockchain device, and an operating method for a power semiconductor SoC. The power semiconductor SoC includes a sensor unit, a switch control signal detector, an OTP register, and a control logic circuit.

## Description

### BACKGROUND

### 1. Technical Field

The present disclosure relates to a power semiconductor device, and more particularly, to a power semiconductor SoC including DC-based power usage measurement, control, and security elements that can be used as a core element of a blockchain device, and an operating method for a power semiconductor SoC.

### 2. Related Art

The spread of renewable energy is an important factor in solving the problem of global warming through carbon reduction. The use of renewable energy is a global trend, but the rapid inflow of renewable energy into a power grid (GRID) at a specific time period has caused confusion in power grid frequency control, resulting in a large-scale blackout phenomenon.

A grid-centered power supply system constructed so far requires a huge cost for network construction. Therefore, to overcome this problem, electricity users are attempting to build micro and nano grids of renewable energy for their own consumption.

In order to issue carbon credits, the entire process of generation and consumption of renewable energy should be tracked and proven. In the generation, distribution and consumption of the renewable energy, solar DC generation and battery storage & DC home appliances that do not go through the grid should be measured at each stage to generate 'verifiable and unchangeable data' from the production to consumption of the renewable energy, For this purpose, a device that can be combined with blockchain technology is required.

### SUMMARY

Various embodiments are directed to providing a power semiconductor SoC including DC-based power usage measurement, control, and security elements so that it can be used as a core element of a blockchain device.

Various embodiments are directed to providing an operating method for a power semiconductor SoC including DC-based power usage measurement, control, and security elements so that it can be used as a core element of a blockchain device.

Objects of the present disclosure are not limited to the above-mentioned objects. That is, other objects that are not mentioned may be obviously understood by those skilled in the art to which the present disclosure pertains from the following description.

In an embodiment, an power semiconductor SoC includes a sensor unit, a switch control signal detector, an OTP register, and a control logic circuit.

The sensor unit may monitor a temperature of a switch constituting the power semiconductor SoC, a voltage across the switch, and a current, respectively. The switch control signal detector receives an operation control signal applied from the outside. The OTP register includes a first register unit used when manufacturing the power semiconductor SoC and a second register unit used when applying the power semiconductor SoC to a blockchain. The control logic circuit generates a gate signal controlling opening and closing of the switch by correcting temperature, voltage, and current values (hereinafter, monitored values) monitored by the sensor unit using a correction value stored in the first register unit in response to the operation control signal and then using a result of comparison with a preset circuit protection condition.

In another embodiment, an operating method for a power semiconductor SoC includes a post-manufacturing test step of performing a test before shipment after manufacturing the power semiconductor SoC and storing temperature/voltage/current values for correction in an index register and step 312 of applying a temperature, voltage, and current of a switch included in the power semiconductor SoC received from a sensor unit to the temperature/voltage/current values for correction to generate corrected values, a step of assigning a serial number to the power semiconductor SoC in order to apply the power semiconductor SoC, which has undergone the post-manufacturing test, to a blockchain, and storing the serial number in a serial number register, and a step of storing, by the power semiconductor SoC to which the serial number is assigned, a key value corresponding to a password in the LEDGER register at the time of generation of a token combined with a user's independent asset.

Objects of the present disclosure are not limited to the above-described objects, and other objects that are not mentioned may be obviously understood by those having ordinary skill in the art to which the present disclosure pertains from the following description.

The power semiconductor SoC and the operating method for a power semiconductor SoC according to the present disclosure as described above include the DC-based power usage measurement, control, and security elements so that they can be used as the core elements of the blockchain device, and thus, can be combined with the blockchain technology as well as the operation of the power semiconductor SoC.

Effects which can be achieved by the present disclosure are not limited to the above-described effects. That is, other objects that are not described may be obviously understood by those skilled in the art to which the present disclosure pertains from the following description.

### BRIEF DESCRIPTION OF THE DRAWINGS

FIG. 1 is a block diagram of a power semiconductor SoC according to the present disclosure to which blockchain technology may be applied.
FIG. 2 is a diagram illustrating an embodiment of an internal configuration of an OTP register.
FIG. 3 is a diagram illustrating an embodiment of an operating method for a power semiconductor SoC.

### DETAILED DESCRIPTION

In order to sufficiently understand the present disclosure, operational advantages of the present disclosure, and objects accomplished by embodiments of the present disclosure, the accompanying drawings for describing exemplary embodiments of the present disclosure and contents described in the accompanying drawings should be referred to.

Hereinafter, exemplary embodiments of the present disclosure will be described in detail with reference to the accompanying drawings. The same reference numerals in each drawing denote the same components.

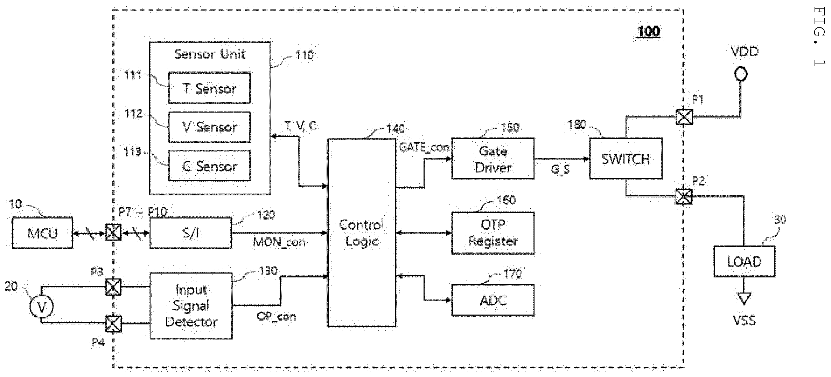

FIG. 1 is a block diagram of a power semiconductor SoC according to the present disclosure to which blockchain technology may be applied.

Referring to FIG. 1, a power semiconductor SoC (hereinafter, power semiconductor SoC 100) according to the present disclosure to which blockchain technology may be applied includes a sensor unit 110, a serial interface 120, a switch control signal detector 130, a control logic circuit 140, a gate driver 150, an OTP register 160, an ADC 170, and a switch 180.

The sensor unit 110 includes a temperature sensor 111, a voltage sensor 112, and a current sensor 113 that monitor a temperature T of the switch 180 constituting the power semiconductor SoC 100, a voltage V across the switch 180, and a current C, respectively. Temperature, voltage, and current values T, V, and C monitored by the sensor unit 110 are transmitted to the control logic circuit 140.

The serial interface 120 is an interface between a MCU 10 outside the power semiconductor SoC 100 and the control logic circuit 140. A monitor control signal MON_con for monitoring a status of power and load is received from the MCU 10, and transmitted to the control logic circuit 140.

The switch control signal detector 130 receives an operation control signal OP_con having a voltage level of, for example, 5V (volts) or higher from the external power supply 20 and transmits the received operation control signal OP_con to the control logic circuit 140.

The control logic circuit 140 transmits the temperature, voltage, and current values T, V, and C (hereinafter referred to as monitored values) monitored by the sensor unit 110 to the ADC 170 in response to the monitor control signal MON_con and the operation control signal OP_con to convert the monitored values T, V, and C, which are analog values, into digital values T, V, and C, corrects the monitored values T, V, and C, which are converted into the digital form in the ADC 170, by using correction values REF_T, REF_V, and REF_C (described later) stored in the OTP register 160, and then generates a gate signal G_S that controls opening and closing of the switch 180 by using the result of comparison with preset circuit protection conditions.

The switch 180 provides or blocks a path through which a current is supplied from a first voltage source VDD connected to one terminal P1 to a load 30 connected to another terminal P2 in response to the gate signal G_S. The load 30 is installed between another terminal P2 of the switch 180 and a second voltage source VSS. Here, the first voltage source VDD has a relatively high voltage level (voltages) compared to the second voltage source VSS, and for example, the second voltage source VSS may be a ground voltage.

The OTP register 160 includes a first register unit used in the production of the power semiconductor SoC 100 and a second register unit used during the application of the blockchain.

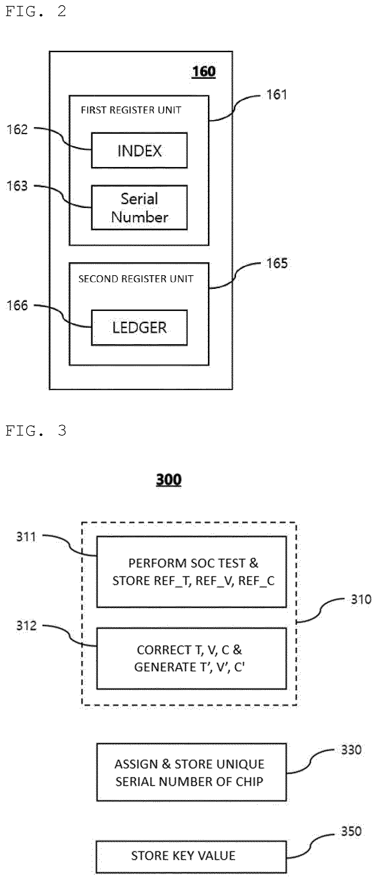

FIG. 2 is a diagram illustrating an embodiment of an internal configuration of an OTP register.

Referring to FIG. 2, the OTP register 160 includes a first register unit 161 including an index register 162 and a serial number register 163 and a second register unit 165 including an LEDGER register 166.

The index register 162 stores a correction temperature REV_T, a correction voltage REV_V, and a correction current REV_C for correcting the monitored values T, V, and C received from the sensor unit 110. The power semiconductor SoC 100 according to the present disclosure is produced on a disc-shaped wafer having a certain diameter, and the electrical characteristics of the power semiconductor SoC 100 located at a center of the wafer and the power semiconductor SoC 100 located around the water are different.

For this reason, the influence of the magnitudes of the temperature T, voltage B, and current C measured by the sensor unit 110 on the circuit operation and physical characteristics of the power semiconductor SoC 100 may have a certain difference for each power semiconductor SoC 100, and the correction values REV_T, REV_V, and REV_C obtained by being tested before shipment of the power semiconductor SoC 100 are stored in the index register 162.

In this case, the control logic 140 reflects the correction values REV_T, REV_V, and REV_C stored in the index register 162 in the monitored values T, V, and C in the digital form and corrects the correction values REV_T, REV_V, and REV_C, and determines a gate control signal GATE_con according to corrected values T', V', and C'. Here, generating the gate control signal GATE_con according to the corrected values T', V', and C' means determining whether the power semiconductor SoC 100 is operating normally by comparing the corrected values T', V', and C' with the prestored circuit protection conditions, and operating the switch 180 when it is determined that there is no problem in operating the switch 180, that is, when it is determined that the power semiconductor SoC 100 meets the normal operation conditions, and conversely, stopping the operation of the switch 180 when it is determined that the power semiconductor SoC 100 is in overheating, overvoltage, or overcurrent state.

The serial number register 163 stores a unique serial number assigned to the power semiconductor SoC 100, which has completed storing the correction value, in the index register 162 before shipment. For example, assuming that more than 10 billion individual identification factors are required, it is preferable that the serial number registers 163 is configured to be 34 bits or more. The serial number register 163 is intended to ensure integrity until the token is generated, and will be used only once.

The LEDGER register 166 stores a key value collected through a secure element designated by a power user who uses electricity for self-consumption. To ensure the integrity of the token at the time of generation, which is a combination of the independent assets of the power user and the power semiconductor SoC 100 according to the present disclosure, it is preferable that a key value stored in the LEDGER register 166 has a value of at least 32 bytes, i.e., 256 bits.

The operation of the power semiconductor SoC according to the present disclosure illustrated in FIG. 1 proceeds as follows.

While the first voltage source VDD is connected to one terminal P1 of the switch 180 and the load 30 is connected to another terminal P3, when the operation control signal OP_con having a voltage level of 5 V (volts) or higher is input to the switch control signal detector 130, the control logic circuit 140 converts the temperature, voltage, and current values T, V, and C detected by the sensor unit 110 into the digital values in the ADC 170, modifies the values converted into the digital values by reflecting the correction values REV_T, REV_V, and REV_C stored in the index register 162, and compares the modified values T', V', and C' with the preset circuit protection conditions, and when the operating conditions are met, transmits the gate control signal GATE_con to the gate driver 150, and the gate driver 150 transmits the gate signal G_S controlling the opening and closing of the switch in response to the gate control signal GATE_con to turn on the switch 180 so that the current flows from the first voltage source VDD to the load 30. Here, it may be determined as an instruction not to activate the switch 180 when the voltage level of the operation control signal OP_con is 2.5 V or lower.

In this case, when the external MCU 20 transmits a signal instructing to monitor the status of the power supply and load to the control logic circuit 140, the control logic circuit 140 transmits the temperature, voltage, and current values T, V, and C detected by the sensor unit 110 to the ADC 170 to convert the temperature, voltage, and current values T, V, and C into the digital values, and receives the temperature, voltage, and current values T, V, and C converted into the digital form from the ADC 170 and corrects the temperature, voltage, and current values T, V, and C by reflecting the correction values REV_T, REV_V, and REV_C stored in the index register 162, and then compares the corrected temperature, voltage, and current values T', V', and C' with the circuit protection conditions that serve as criteria for determining the overheating, overvoltage, and overcurrent conditions preset inside the control logic circuit 140 to determine whether to maintain the operation of the power semiconductor SoC 100 or whether to stop the operation of the power semiconductor SoC 100. Stopping the operation means that the switch 180 is turned off.

FIG. 3 illustrates an embodiment of an operating method for a power semiconductor SoC.

Referring to FIG. 3, an operating method for a power semiconductor SoC 300 according to the present disclosure includes a post-manufacturing test step 310 that includes a step 311 of performing a test before shipment after manufacturing the power semiconductor SoC 100 and storing the temperature/voltage/current values REV_T, REV_V, and REV_C for correction in the index register 162 and step 312 of applying the received temperature, voltage, and current T, V, and C of the switch to the temperature/voltage/current values REV_T, REV_V, and REV_C for correction to generate the corrected values T', V', and C', a step 330 of assigning a serial number to the power semiconductor SoC 100 in order to apply the power semiconductor SoC 100 and storing the serial number in the serial number register 153, which has undergone the post-manufacturing test, to the blockchain, and a step 350 of storing, by the power semiconductor SoC 100 to which the serial number is assigned, a key value corresponding to a password in the LEDGER register 166 at the time of generation of the token combined with the user's independent asset.

Although not illustrated in FIG. 1, an embodiment in which the power semiconductor SoC 100 may include a source voltage generator for generating a voltage used internally, a voltage sensor for measuring a voltage level of a source voltage generated from the source voltage generator, a charge pumping oscillator for pumping the voltage level of the gate signal G_S, an oscillator timer, an ESD circuit, etc., can be implemented.

## Claims

1. A power semiconductor SoC, comprising:
a sensor unit configured to monitor a temperature of a switch constituting the power semiconductor SoC, a voltage across the switch, and a current, respectively;
a switch control signal detector configured to receive an operation control signal applied from the outside;
an OTP register including a first register unit used when manufacturing the power semiconductor SoC and a second register unit used when applying the power semiconductor SoC to a blockchain; and
a control logic circuit configured to generate a gate signal controlling opening and closing of the switch by correcting temperature, voltage, and current values (hereinafter, monitored values) monitored by the sensor unit using a correction value stored in the first register unit in response to the operation control signal and then using a result of comparison with a preset circuit protection condition.

2. The power semiconductor SoC of claim 1, further comprising:
a serial interface configured to receive a monitor control signal for monitoring a status of power and load from an MCU outside the power semiconductor SoC and transmit the received monitor control signal to the control logic circuit,
wherein the control logic circuit operates in response to the operation control signal and the monitor control signal.

3. The power semiconductor SoC of claim 1, further comprising:
an ADC configured to convert an analog signal into a digital signal,
wherein the control logic circuit converts the monitored value in an analog form received from the sensor unit into the monitored value in a digital form using the ADC, and applies the correction value stored in the first register unit to the converted value for correction.

4. The power semiconductor SoC of claim 3, wherein the first register unit includes an index register and a serial number register,
the index register stores a correction value including a correction temperature, a correction voltage, and a correction current used to correct the monitored value received from the sensor unit, and
the serial number register stores a unique serial number assigned upon shipment of the power semiconductor SoC.

5. The power semiconductor SoC of claim 4, wherein the serial number register store 34 bits.

6. The power semiconductor SoC of claim 3, wherein the second register unit includes an LEDGER register that stores a key value collected through a security element designated by a power user who use electricity for self-consumption.

7. The power semiconductor SoC of claim 6, wherein the LEDGER register stores 32 bytes.

8. The power semiconductor SoC of claim 1, wherein a voltage level of the operation control signal is 5 V or higher when the switch is to be operated and 2.5 V or lower when the switch is not to be operated.

9. The power semiconductor SoC of claim 1, wherein the switch switches a first voltage source connected to one terminal and a load connected to another terminal in response to the gate signal.

10. The power semiconductor SoC of claim 1, wherein the circuit protection conditions include criteria for overheating, overvoltage, and overcurrent of the switch.

11. An operating method for a power semiconductor SoC, comprising:
a post-manufacturing test step of performing a test before shipment after manufacturing the power semiconductor SoC and storing temperature/voltage/current values for correction in an index register and step of applying a temperature, voltage, and current of a switch included in the power semiconductor SoC received from a sensor unit to the temperature/voltage/current values for correction to generate corrected values;
a step of assigning a serial number to the power semiconductor SoC in order to apply the power semiconductor SoC, which has undergone the post-manufacturing test, to a blockchain, and storing the serial number in a serial number register; and
a step of storing, by the power semiconductor SoC to which the serial number is assigned, a key value corresponding to a password in the LEDGER register at the time of generation of a token combined with a user's independent asset.
